# EUROPÄISCHE PATENTSCHRIFT

(11) **EP 1 995 501 B1**
(45) Veröffentlichungstag und Bekanntmachung des Hinweises auf die Patenterteilung: **19.01.2011**
(21) Anmeldenummer: 08007899.1
(22) Anmeldetag: 24.04.2008
(51) Int. Cl.: F16J 15/34

(54) **Anordnung mit einer Welle und einer Gleitringdichtung**
Arrangement comprising a shaft and a mechanical seal
Dispositif comprenant un arbre et un joint mécanique

(30) Priorität: 22.05.2007 DE 102007025773
(43) Veröffentlichungstag der Anmeldung: 26.11.2008
(73) Patentinhaber: Kaco GmbH & Co. KG, 74072 Heilbronn (DE)
(72) Erfinder: Schwerdtfeger, Markus, 68163 Mannheim (DE)
(74) Vertreter: Jackisch-Kohl, Anna-Katharina

(56) Entgegenhaltungen:
- EP-A- 1 205 695
- EP-A- 1 577 591
- DE-B3-102004 036 974
- DE-U1- 20 312 908
- US-A- 4 416 458
- US-A- 5 797 602

## Beschreibung

Die Erfindung betrifft eine Anordnung mit einer Welle und einer Gleitringdichtung nach dem Oberbegriff des Anspruches 1.

Gleitringdichtungen werden beispielsweise bei Wasserpumpen oder CO₂-Verdichtern von Automobilen eingesetzt. Der Einbau der verschiedenen Komponenten der Gleitringdichtung, insbesondere des Gleitringes und des Gegenringes, erfolgt in getrennten Arbeitsgängen, wodurch die Montage der Gleitringdichtung aufwändig und schwierig ist.

Bei einer bekannten Anordnung (DE 203 12 908 U1) sind der Gleitring und der Gegenring in einem mehrteiligen Gehäuse untergebracht. Der Gleitring ist in Drehrichtung formschlüssig mit dem Gehäuse verbunden. Das Gehäuse ist auf der vom Gegenring abgewandten Seite des Gegenringes mit Presssitz auf der Welle vorgesehen. Der Gegenring wird an einer radialen Wand des einen Gehäuseteiles axial abgestützt. Eine solche Gleitringdichtung ist aufwändig herzustellen. Nachteilig ist bei dieser Ausbildung, dass die Gehäuseteile äußerst genau gefertigt werden müssen, um eine einwandfreie Abdichtung gegenüber der Welle bzw. dem Einbauraum zu gewährleisten.

Bei einer anderen bekannten Gleitringdichtung (US-A-4 416 458) hat der Gegenring in seiner äußeren Mantelfläche eine mittig liegende Ringnut, in der ein Dichtring untergebracht ist. Er liegt dichtend an der Wandung des Einbauraumes an. Zur Axialsicherung des Gegenringes ist ein Sicherungsring vorgesehen, der in einer Nut in der Wandung des Einbauraumes gehalten ist.

Der Erfindung liegt die Aufgabe zugrunde, die gattungsgemäße Anordnung so auszubilden, dass sie einfach montiert werden kann.

Diese Aufgabe wird bei der gattungsgemäßen Anordnung erfindungsgemäß mit den kennzeichnenden Merkmalen des Anspruches 1 gelöst.

Bei der erfindungsgemäßen Anordnung sitzt der Gleitring der Gleitringdichtung mittels der Sekundärdichtung auf dem Gehäuse. Der Gleitring ist formschlüssig mit dem Gehäuse drehfest verbunden. Der Formschluss kann durch Laschen, Einkerbungen oder ähnlichem hergestellt sein, die in entsprechende Ausnehmungen des Gleitringes eingreifen. Das Gehäuse seinerseits ist kraftschlüssig mit der abzudichtenden Welle verbunden. Auf diese Weise wird das Drehmoment zwischen dem Gleitring und der Welle einwandfrei übertragen. Die hydraulische Auslegung der Gleitringdichtung wird im Bereich des Dichtelementes nur durch die relativ einfach herzustellende Wellenpassung an dieser Stelle bestimmt. Das Gehäuse wird dabei in radialer Richtung abgestützt, damit die hydraulische Auslegung der Gleitringdichtung nicht durch druckabhängige Verformungen des Gehäuses nachteilig beeinflusst werden kann. Schließlich kann das Gehäuse infolge der erfindungsgemäßen Ausbildung dünn ausgebildet werden. Der Dichtring zwischen der Welle und dem Gehäuse gewährleistet eine einwandfreie Abdichtung. Der in der Ausnehmung des Gegenringes liegende Dichtring stellt die statische Abdichtung der Gleitringdichtung in der Einbaulage gegenüber dem Einbauraum sicher. Der Ringabschnitt des Sicherungselementes sichert den Dichtring zuverlässig axial in der Ausnehmung. Die erfindungsgemäße Anordnung eignet sich hervorragend für den Einbau bei Kompressoren und Anwendungsfällen ähnlicher Problematik, insbesondere für CO₂-Verdichter in der Automobilanwendung.

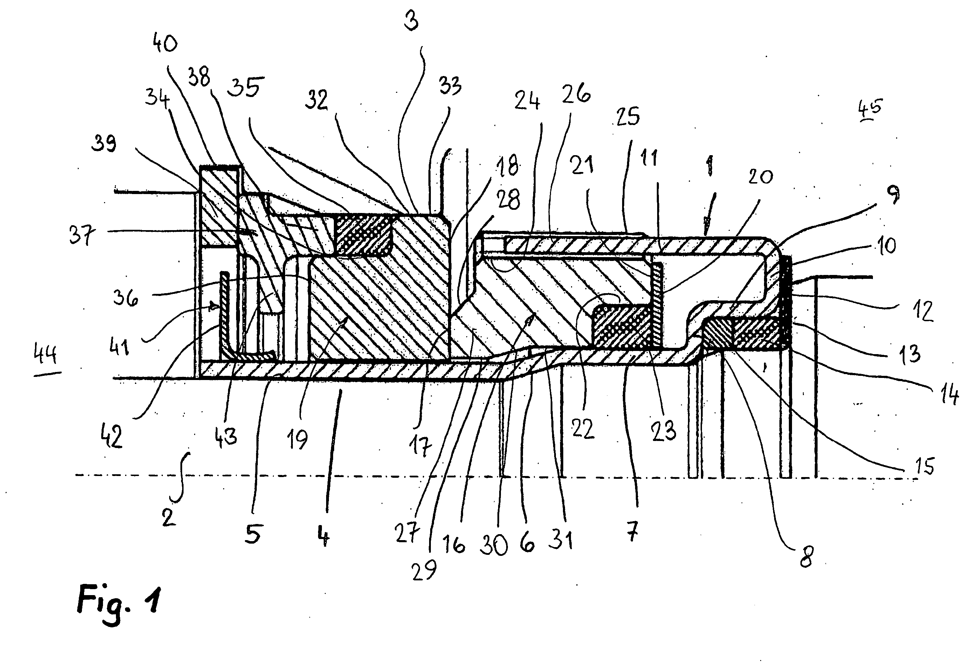

Weitere Merkmale der Erfindung ergeben sich aus den weiteren Ansprüchen, der Beschreibung und der Zeichnung.

Die Zeichnung zeigt im Axialschnitt eine Hälfte einer erfindungsgemäßen Gleitringdichtung.

Sie wird vorteilhaft zur Abdichtung einer Antriebswelle eines CO₂-Verdichters bei Automobilen eingesetzt. Die Gleitringdichtung hat ein Gehäuse 1, das auf einer Antriebswelle 2 drehfest sitzt. Das Gehäuse 1 umschließt alle Teile der Gleitringdichtung unverlierbar. Darum kann die Gleitringdichtung in einem Arbeitsgang von der Antriebsseite aus in den Einbauraum 3 eingesetzt werden. Das Gehäuse 1 hat einen zylindrischen Innenmantel 4, der einen ersten Mantelabschnitt 5 aufweist, der über einen konisch sich erweiternden Zwischenmantelabschnitt 6 in einen zweiten zylindrischen Mantelabschnitt 7 übergeht. Der Mantelabschnitt 4 hat kleineren Innen- und Außendurchmesser als der Mantelabschnitt 7. Die Antriebswelle 2 ist mit entsprechenden Wellenabschnitten versehen, auf denen der Mantelabschnitt 7 des Gehäuses 1 drehfest sitzt.

Der Mantelabschnitt 7 geht über einen radial nach außen gerichteten Flansch 8 in einen Zylinderteil 9 über, der koaxial zu den Mantelabschnitten 5 bis 7 liegt und an den rechtwinklig ein radial nach außen gerichteter Boden 10 anschließt.

Das Gehäuse 1 liegt mit dem Boden 10 unter Zwischenlage einer Unterlegscheibe 12 an einer radialen Schulter 13 der Antriebswelle 2 an. Zwischen dem Zylinderteil 9 und der Antriebswelle 2 ist ein Abdichtring 14 angeordnet, der die Abdichtung zwischen dem Gehäuse 1 und der Antriebswelle 2 sicherstellt. Der Abdichtring 14 wird durch die Unterlegscheibe 12 und einen Sicherungsring 15 lagegesichert, der auf der Antriebswelle 2 sitzt und sich am radialen Flansch 8 des Gehäuses 1 abstützt. Die Unterlegscheibe 12 reicht bis nahe an die Mantelfläche der Antriebswelle 2.

Zwischen dem Innenmantel 4 und einem Außenmantel 11 des Gehäuses 1 ist ein Gleitring 16 untergebracht, der mit einer radialen Stirnseite 17 dichtend an einer radialen Stirnseite 18 eines Gegenringes 19 anliegt. Der Gleitring 16 liegt an seiner dem Gegenring 19 gegenüberliegenden Seite an einer drehfest auf dem Mantelabschnitt 7 sitzenden Sicherungsscheibe 20 an, die in einer Radialebene liegt und nahe bis zum Außenmantel 11 reicht. Die Sicherungsscheibe 20 hat Abstand vom Flansch 8 des Gehäuses 1. Der Gleitring 16 wird über eine Feder 46 axial an den Gegenring 19 gedrückt. Die Feder 46 ist vorzugsweise eine Schraubendruckfeder, die sich mit einem Ende am Gehäuseboden 10 und mit ihrem anderen Ende an der Sicherungsscheibe 20 abstützt.

Der Gleitring 16 liegt mit einer parallel zur Stirnseite 17 verlaufenden radialen Stirnseite 21 flächig an der Sicherungsscheibe 20 an. Die Stirnseite 21 ist mit einer rechtwinkligen Ausnehmung 22 versehen, in der ein Dichtring 23 untergebracht ist, der eine Sekundärdichtung des Gleitringes 16 bildet. Sie sitzt auf dem Mantelabschnitt 7 des Gehäuses 1 und liegt an der Sicherungsscheibe 20 an. Der Gleitring 16 ist formschlüssig mit dem Außenmantel 11 des Gehäuses 1 verbunden. Hierzu ist der Gleitring 16 an seiner äußeren Mantelfläche 24 mit achsparallelen vorstehenden Stegen 25 versehen, in die der Außenmantel 11 mit axial verlaufenden Stegen 26 eingreift. Auf diese Weise wird der Gleitring 16 beim Drehen der Antriebswelle 2 zuverlässig mitgenommen.

Die am Gegenring 19 anliegende radiale Stirnseite 17 ist an einem axial vorstehenden Teil 27 des Gleitringes 16 vorgesehen. Er verjüngt sich in Richtung auf die Stirnseite 17 stetig. Der Vorsprung 27 umgibt den Mantelabschnitt 5 des Gehäuses 1 mit geringem radialen Abstand. Die Stirnseite 17 schließt radial außen stumpfwinklig an eine Kegelfläche 28 und radial innen an eine Zylinderfläche 29 des Gleitringes 16 an. Sie liegt koaxial zum Mantelabschnitt 5 und geht über eine Kegelfläche 30 in eine Zylinderfläche 31 über, in welche die Ausnehmung 22 mündet. Mit der Zylinderfläche 31 liegt der Gleitring 16 auf dem Mantelabschnitt 7 des Gehäuses 1 auf. Im Bereich des Zwischenmantelabschnittes 6 hat der Gleitring 16 Abstand vom Gehäuse 1.

Der Gegenring 19 hat im Wesentlichen rechteckförmigen Querschnitt und liegt mit seiner radial äußeren zylindrischen Mantelfläche 32 an der Wandung 33 des Einbauraumes 3 an. In der Mantelfläche 32 befindet sich eine umlaufende Ausnehmung 34, in der ein Dichtring 35 untergebracht ist. Er liegt dichtend an der Wandung 33 des Einbauraumes 3 an. Der Gegenring 19 umgibt mit geringem radialen Abstand den Mantelabschnitt 5 des Gehäuses 1. Der Dichtring 35 wird in der Ausnehmung 34 durch ein ringförmiges Sicherungselement 37 axial gesichert. Es umgibt den Mantelabschnitt 5 des Gehäuses mit radialem Abstand und hat einen in die Ausnehmung 34 des Gegenringes 19 ragenden Ringabschnitt 38, der mit seiner Stirnseite flächig am Dichtring 35 anliegt. Die radiale Dicke des Ringabschnittes 38 entspricht vorteilhaft der radialen Dicke des Dichtringes 35.

Das Sicherungselement 37 seinerseits wird in der Einbaulage durch einen Sicherungsring 39, vorzugsweise einen Seegerring, axial gesichert. Der Sicherungsring 39 umgibt mit radialem Abstand den Mantelabschnitt 5 des Gehäuses 1 und ist in eine Ringnut 40 in der Wandung 33 des Einbauraumes 3 eingesetzt.

Damit das Sicherungselement 37 in nicht eingebauter Lage nicht von der Gleitringdichtung freikommt, ist sie mit mindestens einem Verschlußelement 41 versehen. Im Ausführungsbeispiel ist es ein im Querschnitt L-förmiger Ring, der auf dem Mantelabschnitt 5 des Gehäuses 1 in geeigneter Weise befestigt ist. Er hat radialen Abstand vom Sicherungsring 39 und vom Sicherungselement 37, so dass er bei der Drehung der Antriebswelle 2 nicht mit diesen Bauteilen der Gleitringdichtung in Berührung kommt. Der radiale Schenkel 42 des Verschlußelementes 41 überragt, in Achsrichtung der Gleitringdichtung gesehen, einen Radialabschnitt 43 des Sicherungselementes 37, der mit Abstand vom Mantelabschnitt 5 des Gehäuses 1 endet.

Anstelle des umlaufenden Verschlußelementes 41 können auf dem Mantelabschnitt 5 auch einzelne, verteilt über den Umfang angeordnete Verschlußelemente vorgesehen sein, die auf dem Mantelabschnitt 5 in geeigneter Weise gehalten werden. Es ist ferner möglich, das Verschlußelement 41 einstückig mit dem Mantelabschnitt 5 auszubilden, indem der Mantelabschnitt 5 an seinem freien Ende beispielsweise konisch aufgeweitet wird. Ebenso ist es möglich, aus dem Mantelabschnitt 5 einzelne Zungen herauszubiegen.

Im Einsatz der Gleitringdichtung dreht das Gehäuse 1 zusammen mit der Antriebswelle 2. Über den Reibschluß und den Formschluß wird der Gleitring 16 drehend mitgenommen. Der Gegenring 19 und das Sicherungselement 37 sind drehfest angeordnet und an der Innenwand 33 des Einbauraumes 3 gehalten. Die Stirnseite 17 des Gleitringes 16 liegt dichtend an der Stirnseite 18 des Gegenringes 19 an. Das Gehäuse 1 ist so gestaltet, dass es die Antriebswelle 2 im Bereich vor und hinter dem Dichtring 23 über den gesamten Umfang kraftschlüssig umschließt. Dadurch wird das Drehmoment zwischen dem Gleitring 16 und der Antriebswelle 2 einwandfrei übertragen. Die hydraulische Auslegung der Gleitringdichtung, der sogenannte k-Faktor, wird infolge dieser Ausbildung nur durch die relativ einfach herzustellende Wellenpassung an dieser Stelle bestimmt. Aufgrund dieser Ausbildung wird das Gehäuse außerdem in radialer Richtung abgestützt, wodurch die hydraulische Auslegung der Gleitringdichtung nicht durch druckabhängige Verformungen nachteilig beeinflußt werden kann. Außerdem kann das Gehäuse 1 aufgrund der beschriebenen Ausbildung sehr dünn ausgeführt werden.

Der Abdichtring 14 und der Dichtring 23 haben nahezu gleichen inneren Abdichtdurchmesser, wobei der Abdichtring 14 unmittelbar auf der Antriebswelle 2 sitzt, während der Dichtring 23 auf dem Mantelabschnitt 7 des Gehäuses 1 sitzt. Dabei hat der Abdichtring 14 kleinere radiale Dicke als der Dichtring 23. Auf der Seite des Verschlußelementes 41 befindet sich die Niederdruckseite 44, während auf der gegenüberliegenden Seite der Gleitringdichtung die Hochdruckseite 45 vorgesehen ist. Da der Abdichtring 14 auf einem Durchmesser ähnlich dem Abdichtdurchmesser des Dichtringes 23 hinter dem Gleitring 16 liegt, wird ein axiales Verschieben der Gleitringdichtung in Richtung auf die Niederdruckseite 44 durch angreifende Druckkräfte verhindert. Somit kann auf eine wellenseitige axiale Abstützung der Gleitringdichtung verzichtet werden.

Beim dargestellten Ausführungsbeispiel sitzt der Abdichtring 14 auf der zylindrischen Mantelfläche der Antriebswelle 2. Es ist auch möglich, in der Antriebswelle 2 für den Abdichtring 14 eine Ringnut vorzusehen, in der der Abdichtring 14 untergebracht ist. In diesem Falle muß dieser Abdichtring 14 auf der Antriebswelle 2 vormontiert werden, bevor die Gleitringdichtung auf der Antriebswelle 2 montiert werden kann. In diesem Falle hat der Zylinderteil 9 des Gehäuses 1 kleineren Durchmesser. Demzufolge hat auch der Flansch 8 eine geringere radiale Breite als beim dargestellten Ausführungsbeispiel. In der Ringnut der Antriebswelle 2 kann der Abdichtring 14 einwandfrei axial gesichert werden, so dass zusätzliche Axialsicherungselemente nicht erforderlich sind.

Beim dargestellten Ausführungsbeispiel sind zur Axialsicherung des Abdichtringes 14 der Sicherungsring 15 und die Unterlegscheibe 12 vorgesehen.

Die beschriebene Gleitringdichtung kann für alle dynamischen Abdichtstellen mit Druckbeaufschlagung und/oder mit limitiertem Einbauraum optimal eingesetzt werden.

## Patentansprüche

1. Anordnung mit einer Welle (2) und einer Gleitringdichtung, die ein auf der abzudichtenden Welle (2) drehfest sitzendes Gehäuse (1), einen Gleitring (16) und einen mit ihm zusammenwirkenden Gegenring (19) aufweist, wobei der Gleitring (16) formschlüssig drehfest mit dem Gehäuse (1) und das Gehäuse (1) auf der vom Gegenring (19) abgewandten Seite des Gleitringes (16) kraftschlüssig mit der Welle (2) verbunden ist, **dadurch gekennzeichnet, dass** zwischen dem Gehäuse (1) und der Welle (2) ein Abdichtring (14) vorgesehen ist, der die Abdichtung zwischen dem Gehäuse (1) und der Welle (2) sicherstellt, und dass der Gegenring (19) in seiner äußeren Mantelfläche (32) eine umlaufende Ausnehmung (34) aufweist, in der ein Dichtring (35) untergebracht ist, der durch ein ringförmiges Sicherungselement (37) axial gesichert ist, das mit der Stirnseite eines in die Ausnehmung (34) des Gegenringes (19) ragenden Ringabschnittes (38) flächig am Dichtring (35) anliegt.

2. Anordnung nach Anspruch 1,
**dadurch gekennzeichnet, dass** der Gleitring (16) eine umlaufende Ausnehmung (22) aufweist, in der als Sekundärdichtung ein Dichtring (23) untergebracht ist.

3. Anordnung nach Anspruch 2,
**dadurch gekennzeichnet, dass** der Dichtring (23) durch ein Axialsicherungselement (20) gesichert ist, das eine in einer Radialebene liegende Ringscheibe ist.

4. Anordnung nach einem der Ansprüche 1 bis 3,
**dadurch gekennzeichnet, dass** der Abdichtring (14) zwischen dem Gehäuse (1) und der Welle (2) durch wenigstens ein Axialsicherungselement (12) gesichert ist, das eine auf der Welle (2) sitzende Ringscheibe oder eine Seitenwand einer Ringnut in der Welle (2) ist.

5. Anordnung nach einem der Ansprüche 2 bis 4,
**dadurch gekennzeichnet, dass** der Abdichtring (14) zwischen dem Gehäuse (1) und der Welle (2) und der Dichtring (23) des Gleitringes (16) zumindest annähernd den gleichen Außendurchmesser haben.

6. Anordnung nach einem der Ansprüche 1 bis 5,
**dadurch gekennzeichnet, dass** das ringförmige Sicherungselement (37) in der Einbaulage durch einen Sicherungsring (39) axial gesichert ist.

7. Anordnung nach einem der Ansprüche 1 bis 6,
**dadurch gekennzeichnet, dass** am Gehäuse (1) wenigstens ein Verschlusselement (41) vorgesehen ist, das zumindest den Gleitring (16) und den Gegenring (19) lagesichert und ein auf einem Gehäusemantel (4) sitzender Ring ist.

8. Anordnung nach Anspruch 7,
**dadurch gekennzeichnet, dass** das Verschlusselement (41) wenigstens eine aus dem Gehäuse (1) herausgebogene Zunge ist.

## Claims

1. An arrangement having a shaft (2) and a slide ring seal which has a housing (1), located on the shaft (2) to be sealed in a rotationally-fixed manner, a slide ring (16) and a counter ring (19) cooperating with the latter, wherein the slide ring (16) is connected to the housing (1) in a positive-locking and rotationally-fixed manner and the housing (1) is, on the side of the slide ring (16) remote from the counter ring (19), connected to the shaft (2) in a non-positive locking manner, **characterised in that** a sealing ring (14), ensuring the sealing between the housing (1) and the shaft (2), is provided between the housing (1) and the shaft (2), and **in that** the outer surface (32) of the counter ring (19) has a circumferential cut-out (34) in which there is housed a sealing ring (35) secured axially by an annular securing element (37) resting in a flat manner against the sealing ring (35) by means of the end face of an annular portion (38) projecting into the cut-out (34) of the counter ring (19).

2. An arrangement according to claim 1, **characterised in that** the slide ring (16) has a circumferential cut-out (22) in which a sealing ring (23) is housed as a secondary seal.

3. An arrangement according to claim 2, **characterised in that** the sealing ring (23) is secured by an axial securing element (20) which is an annular disc lying in a radial plane.

4. An arrangement according to any one of claims 1 to 3, **characterised in that** the sealing ring (14) between the housing (1) and the shaft (2) is secured by at least one axial securing element (12) which is an annular disc located on the shaft (2) or a lateral wall of an annular groove in the shaft (2).

5. An arrangement according to any one of claims 2 to 4, **characterised in that** the sealing ring (14) between the housing (1) and the shaft (2) and the sealing ring (23) of the slide ring (16) have at least approximately the same external diameter.

6. An arrangement according to any one of claims 1 to 5, **characterised in that** the annular securing element (37) is in the fitted position secured axially by a securing ring (39).

7. An arrangement according to any one of claims 1 to 6, **characterised in that** provided on the housing (1) there is at least one closure element (41) which positionally secures at least the slide ring (16) and the counter ring (19) and is a ring located on a housing shell (4).

8. An arrangement according to claim 7, **characterised in that** the closure element (41) is at least one tongue bent out of the housing (1).

## Revendications

1. Agencement comprenant un arbre (2) et une garniture mécanique d'étanchéité à anneau glissant, qui comporte un carter (1) placé sur l'arbre (2) à rendre étanche en y étant lié de manière fixe en rotation, un anneau glissant (16) et, interagissant avec celui-ci, un anneau conjugué (19), l'anneau glissant (16) étant lié de manière fixe en rotation, par conjugaison de formes, avec le carter (1), et le carter (1) étant lié en rotation, par adhérence, avec l'arbre (2), sur le côté de l'anneau glissant (16) éloigné de l'anneau conjugué (19),
**caractérisé en ce qu'**entre le carter (1) et l'arbre (2) est prévue une bague d'étanchéification (14), qui assure l'étanchéité entre le carter (1) et l'arbre (2), et **en ce que** l'anneau conjugué (19) présente, dans sa surface enveloppe extérieure (32), un évidement périphérique (34) dans lequel est logée une bague d'étanchéité (35), qui est arrêtée axialement par un élément d'arrêt (37) de forme annulaire, qui, avec la surface du côté frontal d'un tronçon annulaire (38) s'engageant dans l'évidement (34) de l'anneau conjugué (19), s'appuie contre la bague d'étanchéité (35).

2. Agencement selon la revendication 1,
**caractérisé en ce que** l'anneau glissant (16) présente un évidement périphérique (22) dans lequel est logée une bague d'étanchéité (23) en tant que garniture d'étanchéité secondaire.

3. Agencement selon la revendication 2,
**caractérisé en ce que** la bague d'étanchéité (23) est arrêtée par un élément d'arrêt axial (20), qui est un disque annulaire situé dans un plan radial.

4. Agencement selon l'une des revendications 1 à 3,
**caractérisé en ce que** la bague d'étanchéification (14) entre le carter (1) et l'arbre (2) est arrêtée par au moins un élément d'arrêt axial (12), qui est un disque annulaire placé sur l'arbre (2) ou bien une paroi latérale d'une rainure annulaire dans l'arbre (2).

5. Agencement selon l'une des revendications 2 à 4,
**caractérisé en ce que** la bague d'étanchéification (14) entre le carter (1) et l'arbre (2) et la bague d'étanchéité (23) de l'anneau glissant (16) ont au moins approximativement le même diamètre extérieur.

6. Agencement selon l'une des revendications 1 à 5,
**caractérisé en ce que** l'élément d'arrêt (37) de forme annulaire est, dans la position montée, bloqué axialement par une bague d'arrêt (39).

7. Agencement selon l'une des revendications 1 à 6,
**caractérisé en ce que** sur le carter (1) est prévu au moins un élément de fermeture (41), qui sécurise en position au moins l'anneau glissant (16) et l'anneau conjugué (19), et est constitué par un anneau placé sur l'enveloppe de carter (4).

8. Agencement selon la revendication 7,
**caractérisé en ce que** l'élément de fermeture (41) est au moins une languette repliée hors du carter (1).
